# EUROPEAN PATENT SPECIFICATION

(11) **EP 4 001 892 B1**
(45) Date of publication and mention of the grant of the patent: **11.12.2024**
(21) Application number: 21216830.6
(22) Date of filing: 09.10.2019
(51) Int. Cl.: G01N 15/02, G01N 21/53, G01N 21/85, G01N 21/90, G01N 15/14, G01N 21/25, G01N 15/0227, G01N 15/1433

(54) **DEVICE FOR OPTICAL INSPECTION OF A WASTE LIQUID**
VORRICHTUNG ZUR OPTISCHEN INSPEKTION EINER ABFALLFLÜSSIGKEIT
DISPOSITIF D'INSPECTION OPTIQUE D'UN LIQUIDE DECHET

(30) Priority: 29.10.2018 TW 107138168
(43) Date of publication of application: 25.05.2022
(62) Divisional of application: 19202268.9
(73) Proprietor: Lin, Hsiu-An, Kaohsiung City 824, Taiwan (TW)
(72) Inventor: Lin, Hsiu-An, 824 KAOHSIUNG CITY (TW)
(74) Representative: 2K Patentanwälte Blasberg Kewitz & Reichel

(56) References cited:
- JP-A- 2014 190 902
- US-A- 6 049 381
- US-A1- 2006 008 560
- US-A1- 2011 140 865
- US-A1- 2013 107 261
- US-A1- 2014 111 801
- US-A1- 2017 287 290
- US-A1- 2018 120 214
- 2011 SEPTEMBER: "FlowCAM Manual Version 3.0", 1 September 2011 (2011-09-01), pages 1 - 145, XP055907831, Retrieved from the Internet <URL:http://www.ihb.cas.cn/fxcszx/fxcs_xgxz/201203/P020120329576952031804.pdf> [retrieved on 20220331]

## Description

### BACKGROUND OF INVENTION

### 1. FIELD OF THE INVENTION

The present invention relates to a technique of recycling waste and, more particularly, to a device and method for recycling waste and instantaneously inspecting quality and calculating value of the waste.

### 2. DESCRIPTION OF THE PRIOR ART

Waste oil, originated from the mineral oil, animal oil or plant oil, could be converted into fuel that could be used by engine, burner or boiler, or be converted into recycled raw material through a chemical transformation process. The waste oil could be regarded as a typical green energy that could vitally contribute on the economical development, energy saving and carbon reduction and also contribute on environmental protection and suppression of air pollution.

However, in recent years, the waste oils are illegally obtained by unscrupulous party and are converted into edible oil selling for profiteering on the market. In addition, regarding the industrial waste oils such as waste lubricant oil or waste solvent, they are illegally discarded to pollute the hillside, river, soil or even the ocean. The illegal disposal of the industrial waste oils also generates great impact on the environment and becomes problem about which the governments or environmental authorities are concerned. Conventionally, where the oil comes from and where the waste oil goes to is hardly to be controlled and managed by the authorities concerned, and it is also difficult to prevent the waste oil from entering illegal factory or being discarded illegally. Accordingly, whether the government or the privately owned company, there has a need to provide a system and method for simply, efficiently and effectively managing the footprint of waste oil including the source where it comes from and destination where it goes to so that the food safety of nationals could be effectively controlled.

In the procedure for recycling the waste oil, another important issue is how to conveniently recycled waste oil and effectively grasp the quality of waste oil instantaneously so as to calculate the price of the recycled waste oil. The factors for defining the quality of the waste oil include water content, acid value, iodine value, and residue of the waste oil. These factors are important for determining the recycling price of the waste oil. Conventionally, taking water content for example, the procedure for examining the quality of waste oil includes steps of sampling the recycled waste oil, measuring the weight of the sampled waste oil, heating the sampled waste oil to remove the water, measuring the weight of heated waste oil, and finally, determining the rate of water content according to the measurement before and after heating the waste oil. It is clear that the previously-described procedures are time-consuming, and it usually takes at least 5 to 10 minutes. Since the quality of waste oil could not be obtained instantaneously so that the recycling company could not promptly identify and fairly calculate the price and value of the waste oil.

Accordingly, there has need for providing a device and method for recycling the waste and instantaneously inspecting quality and calculating value of the waste so as to solve the insufficient part of the prior art.

US 2013/107261 A1 discloses a device which performs the steps of obtaining samples of the fluid before and after treatment, delivering the samples to a particle imaging system, obtaining image information of particles in the samples, including particle colors, and comparing the difference in particle color from the first sample to the second sample. A change in particle color detected is indicative of particle death.

US 2014/111801 A1 discloses a device for optical inspection and value determination of a waste liquid comprising: a transparent part; a first pipeline connected to the transparent part; a draining device configured to drain the waste liquid into the transparent part via the first pipeline; a second pipeline provided on the other side of the transparent part to the first pipeline; an illumination device for illuminating the transparent part; a device configured to acquire light from the waste liquid passing through the transparent part and generate at least one signal with respect to the transparent part; a signal processing module configured to receive the signal and determine a quality of the waste liquid according to the signal; a flow rate measuring unit disposed adjacent to the transparent part and configured to measure a flow rate of the waste liquid passing through the second pipeline and determine a volume of the waste liquid according to the flow rate of the waste liquid; and a calculating unit electrically coupled to the flow rate measuring unit and the signal processing module to calculate a value of the waste liquid according to the measured volume of the waste liquid and the determined quality of the waste liquid.

### SUMMARY OF THE INVENTION

The present invention provides devices as set out in the appended set of claims for instantaneously examining the quality of the waste, in which a light source is utilized to project lights onto the waste and an image acquiring device is utilized to detect the light from the waste and generates images with respect to the waste. After that, the images are analyzed to instantaneously determine the quality of the waste according to the quantitative information such as spectrum, color, or transparency obtained from the image or according to a comparing result with image samples having known quality.

The present invention provides a device for instantaneously inspecting the quality of the waste. In case of recycling waste liquid, when the waste liquid is drained, the light is projected onto the tube where the waste fluid flowing therethrough and the image acquiring device is controlled to take image of the tube. The images are further analyzed to determined the quality of the waste liquid according to the spectrum, color or transparency within a short time, such as few seconds, for example, so that the value or price of the recycled waste liquid could be determined almost in the meantime. By means of the novelty inspection method, the problem that the quality of the waste liquid could not be instantaneously inspected would be solved such that the efficiency of recycling the waste liquid could be improved and the objective that more instantaneous, more fair without cheating could be achieved.

The present invention provides devices as set out in the appended set of claims for instantaneously inspecting the quality of the waste liquid and calculating the price and value of the waste liquid according to the determined quality. The price and value of the waste liquid could be transferred to the consumer by different transaction ways. For example, the transaction ways could be, but should not be limited to, a third-party payment, such as LINE pay, for example, chip card storing electronic currency, or bank card for transferring money to bank account. In addition, the consumer could also directly exchange commodity according to the determined price of the waste liquid through a transaction platform built in the device or in remote server. Through the different transaction ways, the will of collecting and recycling the waste liquid of consumers could be increased, and effect of national environmental protection could also be enhanced.

In one embodiment, the present disclosure provides a device for instantaneously inspecting waste quality, comprising a transparent part, a draining device, an illumination device, and an image acquiring device. The transparent part has a waste liquid flowing therethrough. The draining device is utilized for draining the waste liquid and forcing the waste liquid passing through the transparent part. The illumination device for illuminating the transparent part. The image acquiring device is configured to detect the light from the transparent part and generate an image signal with respect to the transparent part. The signal processing module is electrically coupled to the image acquiring device for receiving the image signal and determining a quality of the waste liquid according to the image signal, wherein the signal processing module processes the image signal so as to obtain an image characteristic with respect to the image signal thereby determining the quality of the waste liquid, wherein the image characteristic is corresponding to at least one of a spectrum information, a color information, and a transparency information associated with the image signal of the waste liquid.

In one embodiment, the present disclosure provides a waste liquid recycling device, comprising a transparent part, a draining device, an illuminating device, an image acquiring device, a signal processing module, and a value determining module. The draining device is utilized for draining the waste liquid from a collecting container and forcing the waste liquid passing through the transparent part. The illuminating device for illuminating the transparent part. The image acquiring device is configured to detect the light from the transparent part and generate an image signal with respect to the transparent part. The signal processing module is electrically coupled to the image acquiring device for receiving the image signal and determining a quality of the waste liquid according to the image signal, wherein the signal processing module processes the image signal so as to obtain an image characteristic with respect to the image signal thereby determining the quality of the waste liquid, wherein the image characteristic is corresponding to at least one of a spectrum information, a color information, and a transparency information associated with the image signal of the waste liquid.

In one embodiment, the present disclosure provides a method for recycling the waste liquid, comprising steps of providing a waste liquid recycling device comprising a transparent part, an illuminating device for illuminating the transparent part, an image acquiring device, a signal processing module electrically coupled to the image acquiring unit, and a value determining module, draining a waste liquid passing through the transparent part by a draining device, detecting lights from the transparent part by the image acquiring device for generating at least one image signals, receiving the image signal and determine a quality of the waste liquid according to the image signal by the signal processing module, wherein the signal processing module processes the image signal so as to obtain an image characteristic with respect to the image signal thereby determining the quality of the waste liquid, wherein the image characteristic is corresponding to at least one of a spectrum information, a color information, and a transparency information associated with the image signal of the waste liquid, and, finally, determining a value of the waste liquid according to the quality and an amount of measurement of the waste liquid by the value determining module.

### BRIEF DESCRIPTION OF THE DRAWINGS

The present invention will now be specified with reference to its preferred embodiments illustrated in the drawings, in which:
Fig. 1A illustrates a device for inspecting quality of waste according to one embodiment of the present invention;
Fig. 1B illustrates a device for inspective quality of waste according to another embodiment of the present invention;
Fig. 2 illustrates a device for recycling waste according to one embodiment of the present invention;
Figs. 3-5 respectively illustrate device for recycling waste according to different kinds embodiment of the present invention; and
Fig. 6 illustrates a method for recycling the waste.

### DESCRIPTION OF THE PREFERRED EMBODIMENT

The invention disclosed herein is directed to a device for recycling waste and instantaneously inspecting quality and calculating value of the waste. In the following description, numerous details are set forth in order to provide a thorough understanding of the present invention. It will be appreciated by one skilled in the art that variations of these specific details are possible while still achieving the results of the present invention as set out in the appended set of claims. In other instance, well-known components are not described in detail in order not to unnecessarily obscure the present invention.

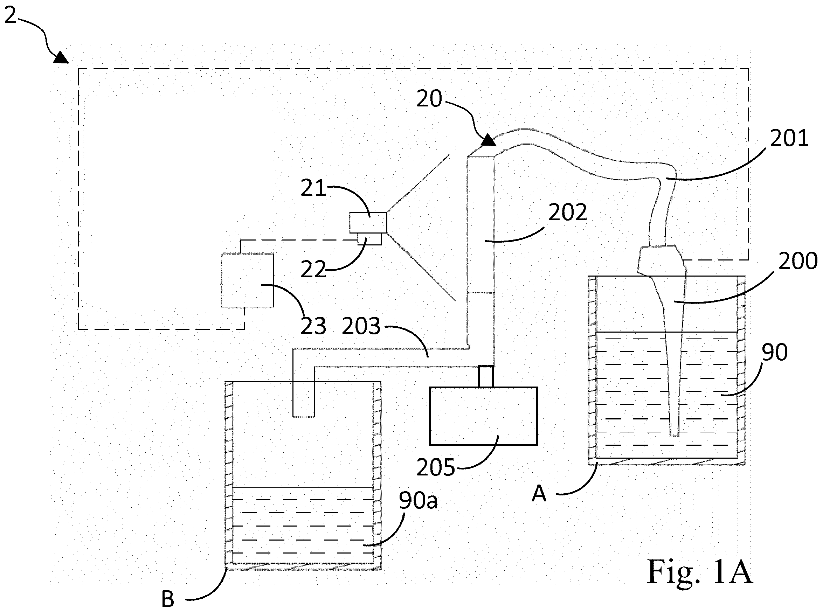

Please refer to fig. 1A which illustrates a device for instantaneously inspecting quality of the waste according to one embodiment of the present invention. In the present embodiment, the waste is waste liquid. The device 2 comprises a draining device 20, an illuminating device 21, an image acquiring device 22, and a signal processing module 23. The draining device 20 is utilized to drain a waste liquid 90, which could be a valuable waste. In one embodiment, the waste liquid could be waste oil, such as waste mechanical oil, waste lubricant oil, a waste edible oil, or waste solvent. In the present embodiment, the waste liquid 90 is waste edible oil. The waste liquid 90 is accommodated in a container A. The container A could be arranged in a waste recycling machine. Alternatively, the container A could also be, but should not be limited to, a waste oil drum utilized by the caterer, or a household bucket.

The draining device 20 has a draining nozzle 200, and draining pipeline 201, and a transparent part, which is a transparent tube segment in the present embodiment. The draining nozzle 200 is inserted into the interior of the container A for draining the waste liquid 90 inside the container A. The draining pipeline 201 is utilized to guide the waste liquid 90 drained by the draining nozzle 200. The transparent tube segment 202 is coupled to the draining pipeline 201 so that the waste liquid 90 in the draining pipeline 201 could passes through the transparent tube segment 202. In addition, another pipeline 203 is coupled to the transparent tube segment 202 for guiding the waste liquid 90a passing through the transparent tube segment 202 into a storage container B, in which the waste liquid 90a accommodated is qualified to be recycled. It is noted that the draining device 20 is well known art to draining the liquid. In one embodiment, the draining device 20 is operated through a negative pressure generating device 205 through which the negative pressure is transmitted into the draining nozzle 200 by the draining pipeline 201 so that the draining nozzle 200 could drain the waste liquid 90 from the container A. It is noted that although the transparent tube segment 202 is a whole transparent tube segment in the present embodiment, it will not limited thereto. There still has another embodiment for implementing the transparent tube segment. For example, the cross section of transparent tube segment will not be limited to the circular shape, other shape such as rectangle shape or polygon shape could also be available. In addition, the transparent tube segment 202 could also be a transparent cover formed on the draining pipeline 201. Alternatively, the pipeline 201 could also be a transparent pipeline, and the transparent tube segment is a part of the transparent pipeline.

The illumination device 21 is utilized to project lights onto the transparent tube segment. The light source of the illumination device 21 has no specific limitation, which could be a broadband light, such as white light, for example, or narrow band light, such as laser, for example. Alternatively, the light source could also be an infrared light source. The user could select proper type of light source as the illumination device according to the user's need.

The image acquiring device 22 detects lights from the transparent tube segment 202 during the draining device 20 draining the waste liquid 90, and generates at least one image signals with respect to the illuminated transparent tube segment 202. It is noted that the lights from the transparent tube segment 202 could be lights penetrating through the transparent tube segment 202 having the waste liquid or lights reflecting from the waste liquid inside the transparent tube segment 202. Since the material of the transparent tube segment 202 is a transparent material, such as glass or plastic material, for example, when the lights projected onto the transparent tube segment 202 having the waste liquid 90 flowing therethrough, a transparency with respect to the waste liquid will be varied according to the composition or quality of the waste liquid 90.

Taking the waste edible oil as an example, the water content of the waste oil will affect the transparency; therefore, when the water content is varied, the level of the transparency will be varied as well. By using the phenomenon, it is capable of instantaneously inspecting the waste edible oil through the images acquired by the image acquiring device 22 thereby determining the quality of the waste edible oil within very short of time, such as few seconds or even shorter, depending on the speed of image processing. Accordingly, under the condition that the illumination device 21 projects the lights onto the transparent tube segment 202, the transparency characteristic of the images generated by the image acquiring device 22 could be analyzed so as to determine the quality of the waste liquid. It is noted the characteristic for determining the waste liquid is not limited to the transparency. For example, the shape, the appearance, the spectrum, and the color that could be quantitated can be alternatives for determining quality of the waste liquid.

It is also noted that, the images could be a video formed by a series of images, a single image obtained at a specific time point, or multiple images obtained at a specific image acquiring frequency, such as 2 seconds taking one image, for example. In addition, the image acquiring device 22 and the illumination device 21 can be arranged at the same side or at opposite side of the transparent tube segment 202.

The signal processing module 23 is electrically coupled to the image acquiring device 22 for receiving the images and determining the quality of the waste liquid. In the present embodiment, the signal processing module 23 converts at least one images into quantitative values and determines the quality of the waste liquid according to the quantitative values, wherein the quantitative values are corresponding to at least one of the shape, appearance, color, and transparency. In one embodiment, if the images is video, after the signal processing module 23 receives the images, the signal processing module 23 will samples at least one frames from the images according to the predetermined sampling frequency or sampling rate.

In one embodiment, taking water content of waste edible oil for example, the transparency of the waste edible oil will be varied according to the water content in the waste edible oil. Accordingly, the brightness and contrast characteristics of each pixel in the acquired images of the waste edible oil having different transparency will also be varied. The signal processing module 23 could obtain the quantitative values according to the brightness and contrast of the images thereby comparing the obtained quantitative values with a predetermined standard value and determining the quality of the waste edible oil according the comparing result. In one embodiment, the signal processing module 23 converts each image into grey scale image and obtains the brightness value, contrast value or the combination thereof. In another embodiment, the signal processing module 23 has capability of artificial intelligence for adjusting the predetermined standard values according to the big data of quantitative values with respect to the characteristic of shape, appearance, spectrum, color, transparency, or combination of at least two previously described characteristics.

In one embodiment, the signal processing module 23 could be integrated circuit module having signal processing capability, such as CPU, MCU or other elements having processing capability. Alternatively, the signal processing module 23 could also be a device such as notebook, workstation, computer, server or PAD computer.

In one embodiment, the user could previously set the standard value associated with the acceptable quality in the signal processing module 23. Taking the water content for example, when the signal processing module 23 determines the transparency of the waste edible oil under the standard value of waste edible oil according to the acquired images, a warning message would be emitted immediately and the draining device 20 is stopped to drain the waste liquid immediately.

In one embodiment, the quality of waste liquid could be determined according to each frame of the captured video acquired by the image acquiring device 22. Alternatively, a sampling rate is configured and a single image is acquired according to the configured sampling rate. The obtained sampling image is then judged by the signal processing module 23 to determine the quality of the waste liquid. Whether the continuous frames or periodically acquired images are utilized to judge the quality of waste liquid, the quality of the recycled waste liquid could be quickly judged and the draining operation could be stopped immediately once quality of the waste liquid is under the standard, whereby the dispute between the recycle company and user or waste liquid provider could be eliminated and the time cost of recycling waste liquid could be saved.

It is noted that although the determination about the quality of waste liquid is explained by taking water content inside the waste liquid as an example, other parameters such as iodine value, or acid value could also be converted into a relationship with the transparency, shape, appearance, spectrum, color so that a database associated different parameters could be established for determining the quality of the waste liquid. Taking waste edible oil as an example, the recycling company could establish database about quality levels, such as excellent, medium, or poor level according to transparency, spectrum, or color to determine the water content, iodine value, acid value of the waste liquid thereby determining the quality of the waste liquid. It is noted that the level stages for determining the quality of waste liquid are not limited to the above three exemplary stages, and the user could define the number of quality levels according to the needs.

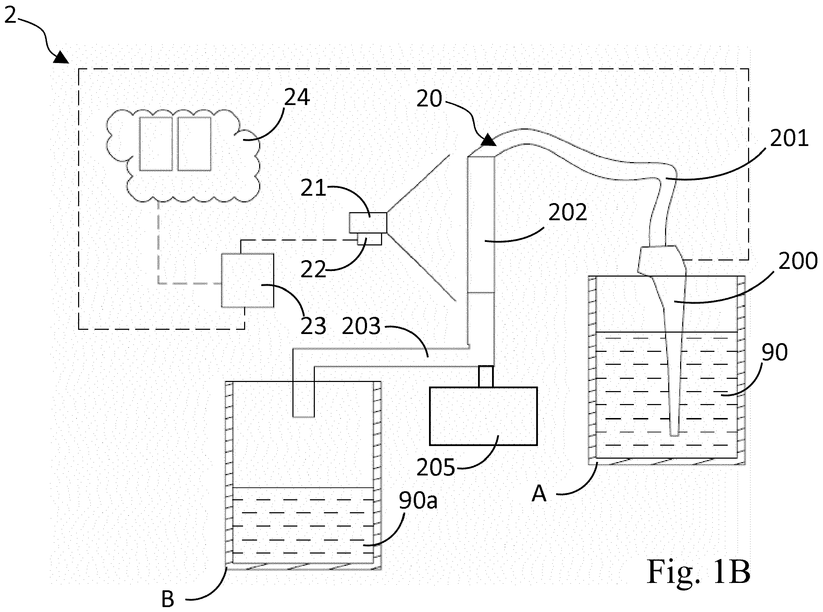

In another embodiment, please refer to fig. 1B, the signal processing module 23 is electrically coupled to an image database having a plurality of image samples associated with the quality of the waste liquid. In one embodiment, taking the water content of waste edible oil for example, the user could establish different image samples respectively corresponding to different water content levels in the waste edible oil. In one embodiment, the user could provide a plurality of containers respectively having waste edible oil with different known water contents. Then, the waste edible oil in each container is drained into the transparent tube segment through the pipeline, and the image acquiring device taking the images with respect to waste edible oil having different known water contents drained from different container. The images are taken as the image samples and are stored in the database 24. In one embodiment, the database could be arranged in a remote server that could be connected by the signal processing module 23 through wire connection or wireless connection. Alternatively, the database 24 could be a local database directly arranged in the same computer in which the signal processing module 23 is also integrated, or arranged in a separated computer electrically coupled to the signal processing module 23 through network. In one embodiment, if the image signal is referred to video signal, when the signal processing module 23 receives the image signal, each frame within the image signal representing different time point is separated and is compared with the image samples pre-stored in the database. The comparing method to determine if the two images are the same/similar or not is well known in the art. For example, the contrast or brightness in the region of interest of the acquired image and image sample are compared with each other for determining the acquired image is the same as or similar to the image sample or not.

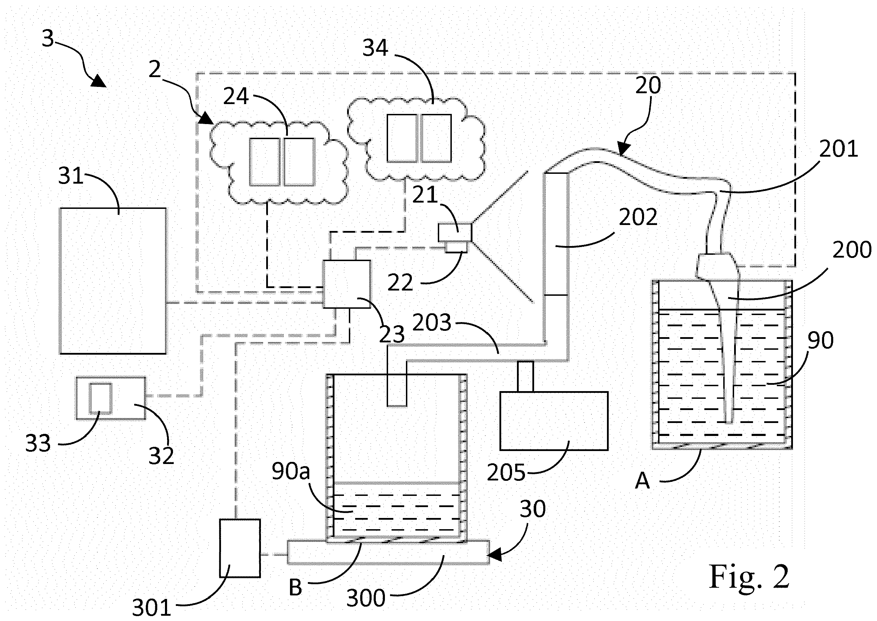

Please refer to the fig. 2, which illustrates a device for recycling the waste according one embodiment of the present invention. The device could combine the instantaneously inspecting device shown as figs. 1A or 1B. In the present embodiment, the architecture shown in fig. 1B is utilized for inspecting the quality of the waste liquid. In the embodiment shown in fig. 2, the device for recycling waste liquid comprises the device 2 for instantaneously inspecting quality of the waste liquid, container B, and a value determining module 30. The container B is communicated with the draining device 20. In the present embodiment, the waste liquid 90a after passing the quality inspection will be guided into the container B. The value determining module 30, in the present embodiment, comprises a weight measuring unit 300 and a calculating unit 301 electrically coupled to the weight measuring unit 300. In one embodiment, the weight measuring unit 300 and the calculating unit 301 could be a separated unit, respectively. Alternatively, the weight measuring unit 300 and the calculating unit 301 could be integrated as a single module. In another embodiment, the calculating unit 301 could be integrated with the signal processing module 23. It is noted that the calculating unit 301 could be a hardware device formed by electrical circuit, or alternatively, it could be implemented by the software, or a combination of hardware and software. After the waste edible oil is drained and inspected, the value determining module 30 will measure the weight of waste liquid 90a in the container B, and calculate the total value of the waste liquid.

In the present embodiment, the device for recycling the waste liquid further comprises a display 31 and a value storage unit 32. The display 31 is utilized to display inspected information when the waste liquid is recycled and display transaction information when the value of the recycled waste liquid is determined. In one embodiment, the images acquired by the image acquiring device 22 could also be shown on the display 31. Moreover, the information associated with the value of the waste, such as weight or value calculated by the value determining module 30 could also be shown on the display 31. In alternative embodiment, if the inspected quality is under the standard level, or any abnormal information is occurred, the information could also be shown on the display 31.

The value storage unit 32, in one embodiment, is a card reader for accessing chip card 33 having capability of electronic currency or digital currency for electronic transaction. The chip card could be, but should not be limited to EasyCard^{®} issued in Taiwan, or Suica^{®} card and PASMO^{®} card issued in Japan. In the embodiment of card reader, the value calculated by the value determining module 30 is converted into electronic money that could be electronically stored into the chip card 33 by the value storage unit 32. The stored money amount is also shown on the display 31.

In another embodiment, the value storage unit 32 could store the converted money into the account tied with the smart phone of the user through a third party payment mechanism. In the present embodiment, the element 33 represents the smart device, such as smart phone, or PAD computer, for example. The third party payment mechanism could be, but should not limited to, line^{®} payment, PayPal^{®} payment, WeChat^{®}, or AliPay^{®}, and etc. In one embodiment, an App, such as Line, WeChat, installed in the smart device is tied with an electronic account of the user so that the value storage unit 32 could store the converted money or currency into the corresponding account through the smart device and APP according to the third party payment policy. Alternatively, the value storage unit 32 could convert the value into credit points that could accumulated by the user. The credit points could be stored into a virtual account provided by the recycle company. The credit points could be accumulated and be utilized to discount the price when the users buy products in the stores or shops having business collaboration with the recycle company.

In another embodiment, the value storage unit 32 could be a card reader of bank card or debit card so that the user could insert the bank card or debit card corresponding to a specific bank account into the value storage unit 32 whereby the bank card/debit card could connect to the remote database of the bank and start a cloud electronic transaction with the bank. In the present embodiment, the value determining module 30 evaluates the value of the waste liquid in the form money or currency and deposit the money into the bank account associated with the inserted bank card through the value storage unit 32. The stored money could also be shown on the display.

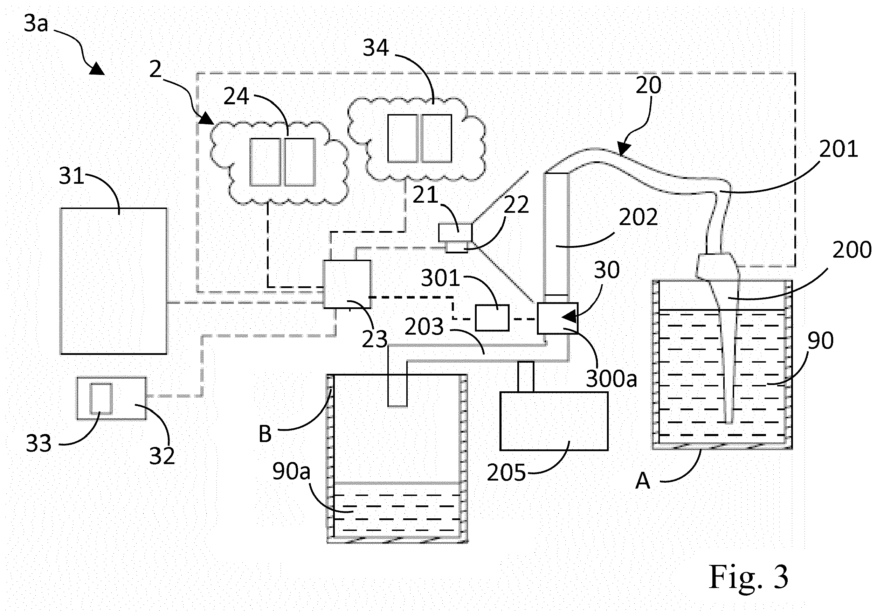

Please refer fig. 3, which illustrates device for recycling the waste according to another embodiment of the present invention. In the present embodiment, basically, it is similar with the embodiment shown in fig. 2. The different part is the value determining module 30 of the device 2 for recycling the waste is not a weight measuring unit but a flow rate measuring unit 300a, instead. In the present embodiment, the calculating unit 301 and flow rate measuring unit 300a are the separated devices. In another embodiment, the calculating unit 301 and flow rate measuring unit 300a are integrated as a single unit. It is noted that the calculating unit 301 could a hardware device or a software program or the combination of hardware and software. When the waste liquid is drained, the value determining module 30 will measure the volume of the waste liquid 90a flowing into the container B according to the flow rate passing through the transparent tube segment 202 measured by flow rate measuring unit 300a and time. Once the value of unit volume is known, the value determining module 30 can calculate the total value of the waste liquid 90a in the container B.

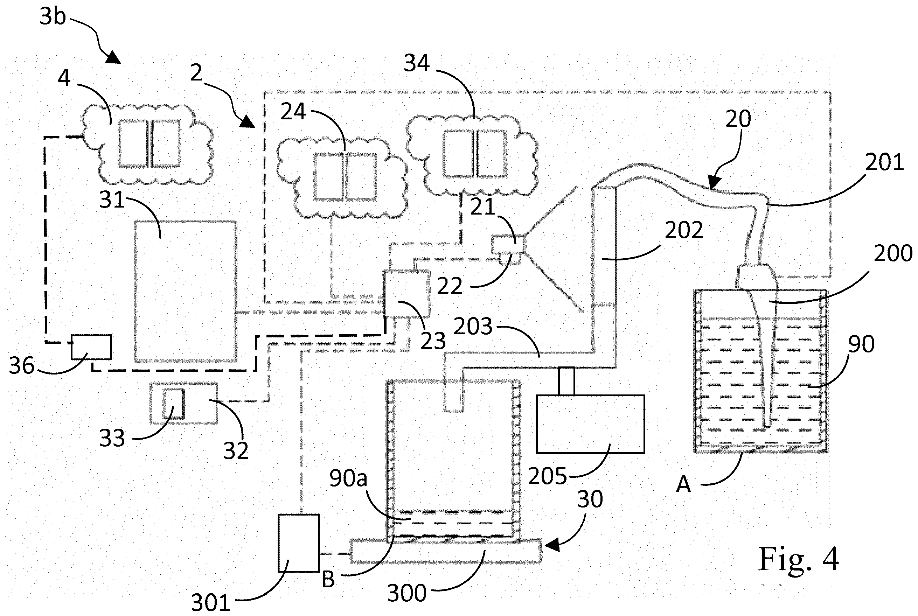

Please refer to fig. 4, which illustrates another embodiment of the device for recycling the waste. In the present embodiment, basically, it is similar to the embodiment shown in fig. 2. The different part is that a transaction module 36 electrically coupled to a cloud transaction platform 4 is arranged in the device 2 for making an exchanging transaction. The transaction module 36 provides a commodity list having commodities shown on the display 31 so that the user could know that what kinds of commodities could be traded when the value of the waste liquid is determined. In one embodiment, when the value of the waste liquid is determined, without choosing to store the value into chip card or store into the bank account, the user could pick at least one commodity through the display, e.g. touch display. Once the commodities are determined, the user could choose to make an exchanging transaction according to the determined value. After the exchanging transaction, if there still has remained value, it could be converted into electronic currency and stored into the chip card or converted into money stored into bank account through the bank card. On the contrary, if the determined value is insufficient to exchange the commodities that are selected by the user, the insufficient money could be deducted through electronic currency stored in the chip card or through bank card. In addition, it is also noted that the transaction module 36 could be an independent device combined with hardware and software, a software program or a device integrated into the signal processing module 23.

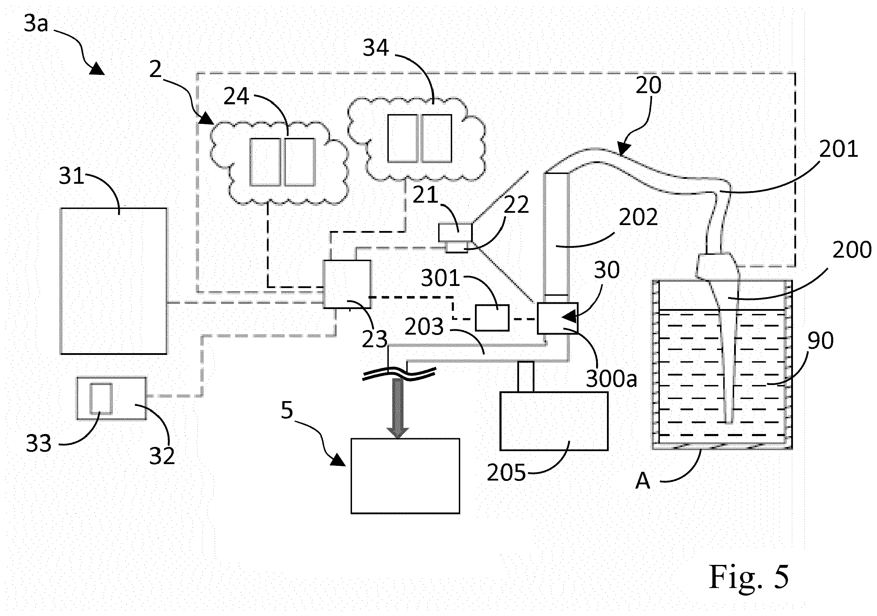

Please refer to fig. 5, which illustrates another embodiment of device for recycling the waste. In the present embodiment, basically, it is similar to the embodiment shown in fig. 3, the different part is that the qualified waste liquid is not stored in the container B in or near the device 2 but is guided into a tank 5 arranged at the remote location, such as recycling factory, through a guiding conduit 203. Regarding the value of the qualified waste liquid could be implemented by the flow rate measuring unit and the calculating unit.

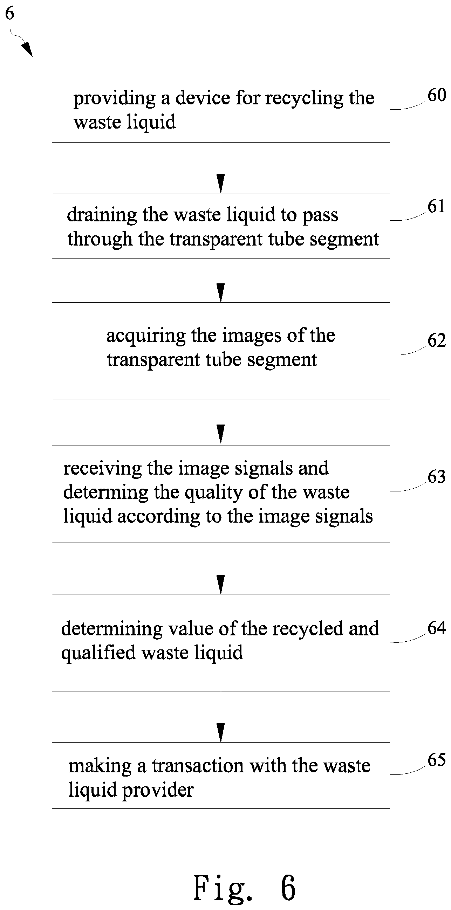

Please refer to fig. 6, which illustrates a method for recycling the waste. At first, a step 60 is performed to provide a device for recycling the waste liquid. The device could be any one of the device shown in figs. 2~ 5. In the present embodiment, the device shown in fig. 2 is utilized. Next, a step 61 is performed to operate the draining device 20 to drain the waste liquid so that the waste liquid 90 could pass through the transparent tube segment 202. During the waste liquid passing through the transparent tube segment 202, the light emitted from the illumination device is projected onto the transparent tube segment 202.

After that, step 62 is performed to acquire the images of the transparent tube segment 202 by the image acquiring device 22 thereby generating image signals. In the present embodiment, the images are continuous frames forming a video. Next, step 63 is performed to receive the image signals by the signal processing module 23 by which a quality of the waste liquid passing through the transparent tube segment 202 could be determined. In the step 63, since the image signals are continuously acquired by the image acquiring device 22, the signal processing module 23 could instantaneously inspect the quality of the waste liquid according to the quantitative data with respect to shape, appearance, spectrum, color or transparency analyzed and obtained from the image signals or according to a comparison result between the sampled images and the standard images. If the quality of the drained waste liquid is below the standard level, the draining device will stop draining the waste liquid; otherwise, the waste liquid will be continuously drained after the waste liquid in the container A becomes empty.

After that, a step 64 is performed to determine the value of the qualified waste oil by the value determining module 30 according to the volume or weight of the waste liquid. Next, a transaction step 65 is performed wherein the value determined in the step 64 is returned to the user through a specific transaction method. In one embodiment, the value could be converted into the electrical currency or money and transmitted to the user through a third party payment policy, or transferring. For example, the previously described transaction methods could be performed by the element 33 electrically coupled to the transaction module 32. The element 33 could be a smart device, chip card or bank card.

Alternatively, the transaction method in step 65 could also be performed by exchanging process. For example, after determining the value of the recycled waste liquid, a step 650 is performed to inquire the user what kind of transaction method that the user would like to select. If the user selects the money transaction, a step 651a is performed to pay the user by third party payment for storing electronic currency into a chip card, or into a virtual account, or transferring to bank account of the user. If the user selects the commodity exchanging process, a step 651b is performed to display exchangeable commodity list and determined value on the display. In the step 651b, the device is electrically coupled to the cloud transaction server, e.g. shown in fig. 5, and the commodities that could be exchanged are listed on the display. Next step 652 is performed that the user could select the required commodity type and amount from the display. After that, a step 653 is performed to convert the selected commodity and amount into price and then the price is compared to the value of the recycled waste liquid. If the price is equal to the value, the step 654 is performed to ask the home delivery information and finish the exchanging process. However, in one case, if the value is insufficient, the device will further ask the user if additional deduction is available to be performed or not. If the user chooses No, the transaction will be canceled and step will back to 650. If the user chooses Yes, then many kinds of paying ways, such as third party payment, transferring money, or electronic currency will be shown on the display so that the user could choose the way for paying the money. If there has remaining value after the exchanging process, the display will show the multiple ways, such as third party payment, transferring money, or electronic currency, so that the user could select the way to get the remaining value.

While the present invention has been particularly shown and described with reference to a preferred embodiment, it will be understood by those skilled in the art that various changes in form and detail may be without departing from the scope of the present invention as set out in the appended set of claims.

## Claims

1. A device for optical inspection of a waste liquid (90) including a water content affecting a quality of the waste liquid and for determining a value of the waste liquid (90), comprising:
a transparent part (202);
a first pipeline (201) connected to the transparent part (202);
a draining device (20) configured to drain the waste liquid (90) into the transparent part (202) via the first pipeline (201); a first container (A);
a second pipeline (203) provided on the other side of the transparent part (202) to the first pipeline (201); a second container (B);
an illumination device (21) for illuminating the transparent part (202);
an image acquiring device (22) configured to acquire light from the waste liquid (90) passing through the transparent part (202) and generate at least one image signal with respect to the transparent part (202);
a signal processing module (23) configured to receive the image signal and determining a quality of the waste liquid according to the image signal;
a flow rate measuring unit (300a) disposed adjacent to the transparent part (202) and configured to measure a flow rate of the waste liquid (90) passing through the second pipeline (203) and determine a volume of the waste liquid according to the flow rate of the waste liquid (90); and
a calculating unit (301) electrically coupled to the flow rate measuring unit (300a) and the signal processing module (23) to calculate a value of the waste liquid (90) according to the measured volume of the waste liquid (90) and the determined quality of the waste liquid (90);
whereby the flow rate measuring unit (300a) is outside an illuminating area of the illumination device (21), wherein the draining device (20) further includes a draining nozzle (200) inserted into the top of the first container (A), along a depth direction of the first container, into the waste liquid in the first container, and at a distance away from contacting the bottom surface of the first container, the first pipeline (201) is between the draining nozzle (200) and the transparent part (202) and configured to guide the waste liquid (90) from the draining nozzle (200) to the transparent part (202), the second pipeline (203) is between the transparent part (202) and the second container (B) and configured to guide the waste liquid (90) from the transparent part (202) to the second container (B).

2. The device of claim 1, wherein the second container (B) is lower than the transparent part (202).

3. The device of claim 2, wherein an elevation of a bottom surface of the first container (A) is higher than an elevation of a bottom surface of the second container (B).

4. The device of claim 1, wherein the transparent part (202) is between the first pipeline (201) and the second pipeline (203).

5. The device of claim 1, wherein the flow rate measuring unit (300a) is disposed on the second pipeline (203).

6. The device of claim 1, wherein the flow rate measuring unit (300a) is spaced apart from the transparent part (202).

7. The device of claim 1, further comprising a negative pressure generating device (205) connected to the second pipeline (203) and configured to generate a negative pressure in the second pipeline (203).

8. A device for optical inspection of a waste liquid (90) including a water content affecting a quality of the waste liquid and for determining a value of the waste liquid (90), comprising:
a transparent part (202);
a first pipeline (201) connected to the transparent part (202);
a draining device (20) configured to drain the waste liquid (90) into the transparent part (202) via the first pipeline (203);
a second pipeline (203) provided on the other side of the transparent part (202) to the first pipeline (201) whereby the transparent part is between the first pipeline (201) and the second pipeline (203);
an illumination device (21) for illuminating the transparent part (202);
an image acquiring device (22) configured to acquire light from the waste liquid (90) passing through the transparent part (202) and generate at least one image signal with respect to the transparent part (202);
a signal processing module (23) configured to receive the image signal and to determine a quality of the waste liquid according to the image signal;
a first container (A) configured to accommodate the waste liquid (90) to be valued;
a second container (B) configured to store the waste liquid (90a) from the second pipeline (203);
a weight measuring unit (300) disposed below the second container (B) and configured to measure a weight of the waste liquid (90a) in the second container (B); and
a calculating unit (301) electrically coupled to the weight measuring unit (300) and the signal processing module (23) to calculate a value of the waste liquid (90) according to the measured weight of the waste liquid (90) and the determined quality of the waste liquid (90);
whereby the weight measuring unit (300) is lower than the transparent part (202), wherein the draining device (20) further includes a draining nozzle (200) inserted into the top of the first container (A), along a depth direction of the first container, into the waste liquid in the first container, and at a distance away from contacting the bottom surface of the first container, the first pipeline (201) is between the draining nozzle (200) and the transparent part (202) and configured to guide the waste liquid (90) from the draining nozzle (200) to the transparent part (202), the second pipeline (203) is between the transparent part (202) and the second container (B) and configured to guide the waste liquid (90) from the transparent part (202) to the second container (B), wherein the waste liquid (90a) accommodated in the second container (B) is qualified to be recycled.

9. The device of claims 8, wherein the weight measuring unit 300 directly contacts the second container (B).

10. The device of claim 8, wherein an elevation of a bottom surface of the first container (A) is higher than an elevation of a top surface of the weight measuring unit 300.

## Patentansprüche

1. Vorrichtung zur optischen Prüfung einer Abfall- bzw. Reststoffflüssigkeit (90), die einen Wassergehalt aufweist, der eine Qualität der Abfall- bzw. Reststoffflüssigkeit beeinflusst, und zur Bestimmung eines Wertes der Abfall- bzw. Reststoffflüssigkeit (90), umfassend:
einen transparenten Abschnitt (202);
eine erste Rohrleitung (201), die mit dem transparenten Abschnitt (202) verbunden ist;
eine Ablassvorrichtung (20), die so konfiguriert ist, dass sie die Abfall- bzw. Reststoffflüssigkeit (90) über die erste Rohrleitung (201) in den transparenten Abschnitt (202) ablässt;
einen ersten Behälter (A)
eine zweite Rohrleitung (203), die auf der anderen Seite des transparenten Abschnitts (202) zur ersten Rohrleitung (201) vorgesehen ist;
einen zweiten Behälter (B);
eine Beleuchtungsvorrichtung (21) zum Beleuchten des transparenten Abschnitts (202);
eine Bilderfassungsvorrichtung (22), die so konfiguriert ist, dass sie Licht von der durch den transparenten Abschnitt (202) hindurchtretenden Abfall- bzw. Reststoffflüssigkeit (90) erfasst und mindestens ein Bildsignal in Bezug auf den transparenten Abschnitt (202) erzeugt;
ein Signalverarbeitungsmodul (23), das so konfiguriert ist, dass es das Bildsignal empfängt und eine Qualität der Abfall- bzw. Reststoffflüssigkeit entsprechend dem Bildsignal bestimmt;
eine Durchfluss-Messeinheit (300a), die benachbart zu dem transparenten Abschnitt (202) angeordnet ist und die konfiguriert ist, um eine Durchflussrate der Abfall- bzw. Reststoffflüssigkeit (90), die durch die zweite Rohrleitung (203) fließt, zu messen und ein Volumen der Abfall- bzw. Reststoffflüssigkeit gemäß der Durchflussrate der Abfall- bzw. Reststoffflüssigkeit (90) zu bestimmen; und
eine Berechnungseinheit (301), die elektrisch mit der Durchfluss-Messeinheit (300a) und dem Signalverarbeitungsmodul (23) gekoppelt ist, um einen Wert der Abfall- bzw. Reststoffflüssigkeit (90) gemäß dem gemessenen Volumen der Abfall- bzw. Reststoffflüssigkeit (90) und der bestimmten Qualität der Abfall- bzw. Reststoffflüssigkeit (90) zu berechnen;
wobei sich die Durchfluss-Messeinheit (300a) außerhalb eines Beleuchtungsbereichs der Beleuchtungsvorrichtung (21) befindet, wobei die Ablassvorrichtung (20) ferner eine Ablassdüse (200) umfasst, die in die Oberseite des ersten Behälters (A), entlang einer Tiefenrichtung des ersten Behälters, in die Abfall- bzw. Reststoffflüssigkeit (90) in dem ersten Behälter (A) und unter einem Abstand von einem Kontakt mit der Bodenfläche des ersten Behälters eingeführt ist, wobei die erste Rohrleitung (201) sich zwischen der Ablassdüse (200) und dem transparenten Abschnitt (202) befindet und so konfiguriert ist, dass sie die Abfall- bzw. Reststoffflüssigkeit (90) von der Ablassdüse (200) zu dem transparenten Abschnitt (202) leitet, die zweite Rohrleitung (203) sich zwischen dem transparenten Abschnitt (202) und dem zweiten Behälter (B) befindet und so konfiguriert ist, dass sie die Abfall- bzw. Reststoffflüssigkeit (90) von dem transparenten Abschnitt (202) zu dem zweiten Behälter (B) leitet.

2. Vorrichtung nach Anspruch 1, wobei der zweite Behälter (B) niedriger ist als der transparente Abschnitt (202).

3. Vorrichtung nach Anspruch 2, wobei die Höhe der Bodenfläche des ersten Behälters (A) höher ist als die Höhe der Bodenfläche des zweiten Behälters (B).

4. Vorrichtung nach Anspruch 1, wobei sich der transparente Abschnitt (202) zwischen der ersten Rohrleitung (201) und der zweiten Rohrleitung (203) befindet.

5. Vorrichtung nach Anspruch 1, wobei die Durchfluss-Messeinheit (300a) an der zweiten Rohrleitung (203) angeordnet ist.

6. Vorrichtung nach Anspruch 1, wobei die Durchfluss-Messeinheit (300a) von dem transparenten Abschnitt (202) beabstandet ist.

7. Vorrichtung nach Anspruch 1, die ferner eine Unterdruckerzeugungsvorrichtung (205) umfasst, die mit der zweiten Rohrleitung (203) verbunden ist und die so konfiguriert ist, dass sie einen Unterdruck in der zweiten Rohrleitung (203) erzeugt.

8. Vorrichtung zur optischen Prüfung einer Abfall- bzw. Reststoffflüssigkeit (90), die einen Wassergehalt aufweist, der eine Qualität der Abfall- bzw. Reststoffflüssigkeit beeinflusst, und zur Bestimmung eines Wertes der Abfall- bzw. Reststoffflüssigkeit (90), umfassend:
einen transparenten Abschnitt (202);
eine erste Rohrleitung (201), die mit dem transparenten Abschnitt (202) verbunden ist;
eine Ablassvorrichtung (20), die so konfiguriert ist, dass sie die Abfall- bzw. Reststoffflüssigkeit (90) über die erste Rohrleitung (203) in den transparenten Abschnitt (202) ablässt;
eine zweite Rohrleitung (203), die auf der anderen Seite des transparenten Abschnitts (202) zu der ersten Rohrleitung (201) vorgesehen ist, wobei der transparente Abschnitt zwischen der ersten Rohrleitung (201) und der zweiten Rohrleitung (203) vorgesehen ist;
eine Beleuchtungsvorrichtung (21) zum Beleuchten des transparenten Abschnitts (202);
eine Bilderfassungsvorrichtung (22), die so konfiguriert ist, dass sie Licht von der durch den transparenten Abschnitt (202) hindurchtretenden Abfall- bzw. Reststoffflüssigkeit (90) erfasst und mindestens ein Bildsignal in Bezug auf den transparenten Abschnitt (202) erzeugt;
ein Signalverarbeitungsmodul (23), das so konfiguriert ist, dass es das Bildsignal empfängt und eine Qualität der Abfall- bzw. Reststoffflüssigkeit entsprechend dem Bildsignal bestimmt;
einen ersten Behälter (A), der so konfiguriert ist, dass er die zu bewertende Abfall- bzw. Reststoffflüssigkeit (90) aufnimmt;
einen zweiten Behälter (B), der so konfiguriert ist, dass er die Abfall- bzw. Reststoffflüssigkeit (90a) aus der zweiten Rohrleitung (203) aufbewahrt;
eine Gewichts-Messeinheit (300), die unterhalb des zweiten Behälters (B) angeordnet ist und die so konfiguriert ist, dass sie ein Gewicht der Abfall- bzw. Reststoffflüssigkeit (90a) in dem zweiten Behälter (B) misst; und
eine Berechnungseinheit (301), die elektrisch mit der Gewichts-Messeinheit (300) und dem Signalverarbeitungsmodul (23) gekoppelt ist, um einen Wert der Abfall- bzw. Reststoffflüssigkeit (90) gemäß dem gemessenen Gewicht der Abfall- bzw. Reststoffflüssigkeit (90) und der bestimmten Qualität der Abfall- bzw. Reststoffflüssigkeit (90) zu berechnen;
wobei die Gewichts-Messeinheit (300) niedriger als der transparente Abschnitt (202) angeordnet ist, wobei die Ablassvorrichtung (20) ferner eine Ablassdüse (200) umfasst, die in die Oberseite des ersten Behälters (A), entlang einer Tiefenrichtung des ersten Behälters, in die Abfall- bzw. Reststoffflüssigkeit in dem ersten Behälter und in einem Abstand von einem Kontaktbereich mit der Bodenfläche des ersten Behälters eingeführt ist, wobei die erste Rohrleitung (201) sich zwischen der Ablassdüse (200) und dem transparenten Abschnitt (202) befindet und so konfiguriert ist, dass sie die Abfall- bzw. Reststoffflüssigkeit (90) von der Ablassdüse (200) zu dem transparenten Abschnitt (202) leitet, die zweite Rohrleitung (203) sich zwischen dem transparenten Abschnitt (202) und dem zweiten Behälter (B) befindet und so konfiguriert ist, dass sie die Abfall- bzw. Reststoffflüssigkeit (90) von dem transparenten Abschnitt (202) zu dem zweiten Behälter (B) leitet, wobei die Abfall- bzw. Reststoffflüssigkeit (90a), die in dem zweiten Behälter (B) aufbewahrt ist, geeignet ist, recycelt zu werden.

9. Vorrichtung nach Anspruch 8, wobei die Gewichts-Messeinheit 300 den zweiten Behälter (B) direkt berührt.

10. Vorrichtung nach Anspruch 8, wobei eine Höhe einer Bodenfläche des ersten Behälters (A) höher ist als eine Höhe einer Oberseite der Gewichts-Messeinheit 300.

## Revendications

1. Un dispositif d'inspection optique d'un liquide déchet (90) comprenant une teneur en eau affectant la qualité du liquide déchet et de détermination d'une valeur du liquide déchet (90), comprenant :
une partie transparente (202) ;
une première canalisation (201) reliée à la partie transparente (202) ;
un dispositif de vidange (20) configuré pour vidanger le liquide résiduaire (90) dans la partie transparente (202) via la première canalisation (201) ;
un premier conteneur (A)
une deuxième canalisation (203) située de l'autre côté de la partie transparente (202) par rapport à la première canalisation (201) ;
un second récipient (B) ;
un dispositif d'éclairage (21) pour éclairer la partie transparente (202) ;
un dispositif d'acquisition d'images (22) configuré pour acquérir la lumière du liquide usé (90) passant à travers la partie transparente (202) et générer au moins un signal d'image par rapport à la partie transparente (202) ;
un module de traitement des signaux (23) configuré pour recevoir le signal d'image et déterminer la qualité du liquide déchet en fonction du signal d'image ;
une unité de mesure du débit (300a) disposée à côté de la partie transparente (202) et configurée pour mesurer un débit du liquide résiduaire (90) passant par la seconde canalisation (203) et déterminer un volume du liquide résiduaire en fonction du débit du liquide résiduaire (90) ; et
une unité de calcul (301) couplée électriquement à l'unité de mesure du débit (300a) et au module de traitement des signaux (23) pour calculer une valeur du liquide résiduaire (90) en fonction du volume mesuré du liquide résiduaire (90) et de la qualité déterminée du liquide résiduaire (90) ;
l'unité de mesure du débit (300a) se trouve en dehors d'une zone d'éclairage du dispositif d'éclairage (21), le dispositif de vidange (20) comprenant en outre une buse de vidange (200) insérée dans la partie supérieure du premier conteneur (A), le long d'une direction de profondeur du premier conteneur, dans le liquide déchet (90) dans le premier conteneur (A), et à une certaine distance de contact avec la surface inférieure du premier conteneur, la première canalisation (201) est située entre la buse de vidange (200) et la partie transparente (202) et est configurée pour guider le liquide résiduaire (90) de la buse de vidange (200) vers la partie transparente (202), la deuxième canalisation (203) est située entre la partie transparente (202) et le deuxième récipient (B) et est configurée pour guider le liquide résiduaire (90) de la partie transparente (202) vers le deuxième récipient (B).

2. Le dispositif selon la revendication 1, dans lequel le deuxième récipient (B) est plus bas que la partie transparente (202).

3. Le dispositif selon la revendication 2, dans lequel une élévation d'une surface inférieure du premier récipient (A) est supérieure à une élévation d'une surface inférieure du deuxième récipient (B).

4. Le dispositif selon la revendication 1, dans lequel la partie transparente (202) se trouve entre la première canalisation (201) et la deuxième canalisation (203).

5. Le dispositif selon la revendication 1, dans lequel l'unité de mesure de débit (300a) est disposée sur la deuxième canalisation (203).

6. Le dispositif selon la revendication 1, dans lequel l'unité de mesure de débit (300a) est espacée de la partie transparente (202).

7. Le dispositif selon la revendication 1, comprenant en outre un dispositif de génération de pression négative (205) connecté à la deuxième canalisation (203) et configuré pour générer une pression négative dans la deuxième canalisation (203).

8. Un dispositif d'inspection optique d'un liquide déchet (90) comprenant une teneur en eau affectant la qualité du liquide déchet et de détermination d'une valeur du liquide déchet (90), comprenant :
une partie transparente (202) ;
une première canalisation (201) reliée à la partie transparente (202) ;
un dispositif de vidange (20) configuré pour vidanger le liquide résiduaire (90) dans la partie transparente (202) via la première canalisation (203) ;
une deuxième canalisation (203) située de l'autre côté de la partie transparente (202) par rapport à la première canalisation (201), la partie transparente se trouvant entre la première canalisation (201) et la deuxième canalisation (203) ;
un dispositif d'éclairage (21) pour éclairer la partie transparente (202) ;
un dispositif d'acquisition d'images (22) configuré pour acquérir la lumière du liquide résiduaire (90) traversant la partie transparente (202) et générer au moins un signal d'image par rapport à la partie transparente (202) ;
un module de traitement des signaux (23) configuré pour recevoir le signal d'image et pour déterminer la qualité du liquide déchet en fonction du signal d'image ;
un premier conteneur (A) configuré pour recevoir le liquide déchet (90) à valoriser ;
un second récipient (B) configuré pour stocker le liquide usé (90a) provenant de la seconde canalisation (203) ;
une unité de mesure du poids (300) disposée sous le second conteneur (B) et configurée pour mesurer le poids du liquide résiduaire (90a) dans le second conteneur (B) ; et
une unité de calcul (301) couplée électriquement à l'unité de mesure du poids (300) et au module de traitement des signaux (23) pour calculer une valeur du liquide déchet (90) en fonction du poids mesuré du liquide déchet (90) et de la qualité déterminée du liquide déchet (90) ;
l'unité de mesure du poids (300) est inférieure à la partie transparente (202), le dispositif de vidange (20) comprenant en outre une buse de vidange (200) insérée dans la partie supérieure du premier conteneur (A), le long d'une direction de profondeur du premier conteneur, dans le liquide déchet dans le premier conteneur, et à une certaine distance de contact avec la surface inférieure du premier conteneur, la première canalisation (201) est située entre la buse de vidange (200) et la partie transparente (202) et est configurée pour guider le liquide résiduaire (90) de la buse de vidange (200) vers la partie transparente (202), la deuxième canalisation (203) est située entre la partie transparente (202) et le deuxième conteneur (B) et est configurée pour guider le liquide résiduaire (90) de la partie transparente (202) vers le deuxième conteneur (B), le liquide résiduaire (90a) logé dans le deuxième conteneur (B) étant qualifié pour être recyclé.

9. Le dispositif selon la revendication 8, dans lequel l'unité de mesure de poids 300 est directement en contact avec le deuxième conteneur (B).

10. Le dispositif selon la revendication 8, dans lequel une élévation d'une surface inférieure du premier conteneur (A) est plus élevée qu'une élévation d'une surface supérieure de l'unité de mesure de poids 300.
